# EUROPEAN PATENT APPLICATION

(11) **EP 2 378 501 A1**
(43) Date of publication of application: **19.10.2011**
(21) Application number: 10159988.4
(22) Date of filing: 15.04.2010
(51) Int. Cl.: G09B 1/00, G09B 5/00

(54) **Improved pharmaceutical therapy.**

(71) Applicant: Pharma Rhei, 6116 BR Roosteren (NL)
(72) Inventor: Kuy, Van Der, Paul-Hugo Marie, 6116 BR ROOSTEREN (NL)
(74) Representative: Habets, Winand

(57) **Abstract**

The present invention relates to a method for the improvement of the effectiveness of a pharmaceutical therapy comprising intake by the patient of at least two different drugs by monitoring the intake of only part of the drugs.

The present invention further relates to a set of at least two different drugs for intake by a patient, wherein only part of the different drugs is present in a form by which the intake of the drug can be monitored.

The present invention also relates to a method for the treatment of a patient with a drug against a certain disease, wherein the patient is also being treated with another drug against the same or a different disease, and wherein the intake of the said other drug is being monitored.

The present invention also relates to a medicament for treatment of a specific disease wherein the medicament is in a form which enables monitoring of the adherence of the patient, for improvement of the adherence of the patient to a second medicament to be taken by the same patient.

## Description

The present invention relates to a method for improvement of the effectiveness of a pharmaceutical therapy comprising administration of more than one drug.

Pharmaceutical therapeutic treatment generally relies on the intake or administration of pharmaceutically active compounds. The aim of this treatment is to attain in the body a level of the therapeutically active ingredient which is at the one hand high enough to establish the desired therapeutic effect, but on the other hand is not so high so as to cause unwanted side effects. Furthermore, the therapeutic treatment is generally aimed at maintaining a steady level of the therapeutically active ingredient throughout the period of treatment. Depending on the balance between the rate of uptake of the drug, and the rate of metabolism thereof the drug has to be administered more or less frequently. Evidently, the treatment will be most effective if the patient adheres to the ideal administration regimen. In practice, adherence is a major problem in pharmaceutical treatment. Patients tend to forget to take the drug at the regular intervals prescribed. Often patients take the drug irregularly or not at all, in particular, if the patient experiences undesirable or unpleasant side effects.

The WHO defines adherence as "the extent to which a person's behaviour- taking medication, following a diet, and/or executing lifestyle changes, corresponds with agreed recommendations from a health care provider."

In the following text adherence will be focussed on medication. Adherence is especially important in chronic diseases. Chronic diseases are defined as "diseases which have one or more of the following characteristics: they are permanent, leave residual disability, are caused by non-reversible pathological alteration, require special training of the patient for rehabilitation, or may be expected to require a long period of supervision, observation or care".

The following chronic disease can be specified: asthma, diabetes, hypertension, depression, cancer, epilepsy, HIV, tuberculosis and tobacco smoking.

A number of rigorous reviews have found that, in developed countries, adherence among patients suffering chronic diseases averages only 50%. The magnitude and impact of poor adherence in developing countries is assumed to be even higher given the paucity of health resources and inequities in access to health care.

The problem of non-adherence can be demonstrated by focussing on hypertension. Despite the availability of effective treatments, studies have shown that in many countries less than 25% of patients treated for hypertension achieve optimum blood pressure. For example, in the United Kingdom and the United States, only 7% and 30% of patients, respectively, had good control of blood pressure and in Venezuela only 4.5% of the treated patients had good blood pressure control. Poor adherence has been identified as the main cause of failure to control hypertension. In one study, patients who did not adhere to beta-blocker therapy were 4.5 times more likely to have complications from coronary heart disease than those who did.

The best available estimate is that poor adherence to therapy contributes to lack of good blood pressure control in more than two-thirds of people living with hypertension.

Considering that in many countries poorly controlled blood pressure represents an important economic burden (e.g. in the United States the cost of health care related to hypertension and its complications was 12.6% of total expenditure on health care in 1998), improving adherence could represent for them an important potential source of health and economic improvement, from the societal, institutional and employers' point of view.

High blood pressure or hypertension is easily preventable through diet, exercise and drugs, yet it is the second-leading cause of death in the United States. One in six deaths in the United States is due to hypertension, and it costs our healthcare system $73 billion each year in expenses.

Adherence is a primary determinant of the effectiveness of treatment because poor adherence attenuates optimum clinical benefit. Good adherence improves the effectiveness of interventions aimed at promoting healthy lifestyles, such as diet modification, increased physical activity, non-smoking and safe sexual behaviour, and of the pharmacological-based risk-reduction interventions.

It also affects secondary prevention and disease treatment interventions.

Studies consistently find significant cost-savings and increases in the effectiveness of health interventions that are attributable to low-cost interventions for improving adherence. In many cases investments in improving adherence are fully repaid with savings in health care utilization and, in other instances, the improvement in health outcomes fully justifies the investment.

The problem of non-adherence has been much discussed, but has been relatively neglected in the mainstream delivery of primary care health services. Despite an extensive knowledge base, efforts to address the problem have been fragmented, and with few exceptions have failed to harness the potential contributions of the diverse health disciplines. A stronger commitment to an approach is needed in order to make progress in this area.

To illustrate the weight the WHO gives to possibilities to increase adherence, the following message has been formulated: *"Increasing the effectiveness of adherence interventions might have a far greater impact on the health of the population than any improvement in specific medical treatments"*

Adherence to intake of drugs is even more important if the patient has to take a number of drugs which all work together to attain a desired therapeutic effect, e.g. because the drugs show some sort of interaction. This is for example the case with the simultaneous intake of a diuretic and an ACE-inhibitor in order to remedy hypertension.

It is well known that patients take a drug more regularly if control mechanisms are applied. For example if the patient is forced to take the drug or is reminded at the moment the drug is to be taken or if the patient is aware that the intake of the drug is being monitored. This is particularly important also if the patient is involved in a clinical study to study the effectiveness and efficacy of the drug in relation to the disease to be cured.

A well known mechanism to monitor the intake of drugs is by MEMS V Track Caps (Aardex Ltd., Switzerland), an electronic monitoring device which offers the chance to verify how often and at which interval the pillbox is opened. The MEMS is designed to gather the dosing histories of ambulatory patients with help of a chip built-in the cover of a medication container. The chip contains microelectronics and the date and the time on which the medication container is being opened or closed will be registered.

However, such a monitoring system for the intake of drugs brings about considerable costs. In particular, if a patient has to take several different drugs and wherein the success of the therapy depends on the intake of all of these different drugs throughout the day (this is called here "combination therapy") it will be very costly to monitor the intake of each of these drugs,

Surprisingly it has been found that the effectiveness of a combination therapy can be improved even if the intake of not all of the drugs is being monitored. Hence, it was found that the monitoring of the intake of just one drug out of a combination of drugs which a patient has to take improves the adherence of the drugs which are not monitored. It has further been found that this effect persists over a longer period (up to several years) even after the monitoring of the at least one of the drugs was stopped.

In one embodiment of the present invention the effectiveness of a pharmaceutical therapy comprising intake by the patient of at least two different drugs is improved by monitoring the intake of only part of the different drugs.

In another embodiment the present invention related to a method for the effectiveness of a pharmaceutical therapy comprising intake by the patient of two different drugs by monitoring the intake of one of the different drugs

In a particular embodiment the present invention relates to a method for improving the effectiveness of a combination therapy comprising the intake of at least two different drugs against the same disease by monitoring the intake of one of the different drugs.

"Monitoring" the intake of a drug means here monitoring and/or controlling the intake of drugs in the way as prescribed. This can be done by several methods, such as asking the patients or physicians, standardized patient administered questionnaires, counting remaining dosage units (eg tablets), Medication Event Monitoring System (MEMS), refill data from the community pharmacy, biochemical measurements or the e-blister (electronic blister).

In a further embodiment the present invention relates to a set of at least two different drugs for intake by a patient, wherein only part of the different drugs is present in a form by which the intake of the drug can be monitored.

A "form by which the intake of the drug can be monitored" means here the packaging or repackaging of any kind of medication taken in order to be able to measure the use of the medication by the patient as prescribed. This medication can be one of the following: orally (pill, tablet, capsule, specialty tablet like buccal, sublingual, or orally-disintegrating, thin film (e.g., Listerine PocketPaks), liquid solution or suspension (e.g., drink or syrup), powder or liquid or solid crystals, natural or herbal plant, seed, or food of sorts (e.g., marijuana such as that found in "special brownies")), inhalational (aerosol, inhaler, nebulizer, smoking (often in natural herb (e.g., tobacco, marijuana) or freebase powder form (e.g., cocaine, methamphetamine), vaporizer (usually to vaporize natural herbs like marijuana), parenteral Injection (intradermal (ID), intramuscular (IM), intraosseous (IR), intraperitoneal (IP), intravenous (IV), subcutaneous (SC)), topical (cream, gel, liniment or balm, lotion, or ointment, etc, ear drops (otic), eye drops (ophthalmic), skin patch (transdermal)), suppository (rectal (e.g., enema), vaginal (e.g., douche, pessary, etc).

In the present context with "drug" is meant here a pharmaceutical formulation containing at least therapeutically active constituent or without a therapeutically active constituent, which is administered as an intervention to cause the patient to believe the treatment will change his/her condition.

With a "set of at least two different drugs" is meant here at least two different drugs which each are to be taken by the same patient repeatedly at the same or different intervals and wherein the different drugs can have therapeutic effects against the same disease or against different diseases or a combination thereof. It is expressly included in the present invention to monitor a drug with regimen 1 in order to improve the efficacy of treatment with another drug with regimen 2 whereas regimen 1 is different from regimen 2, for instance regimen 1 is once a day and regimen 2 is twice a day or more often.

In a further embodiment the present invention relates to a method for the treatment of a patient with a first drug against a first disease, wherein the patient is also being treated with at least one second drug against the first or a second disease, and wherein the intake of the at least one second drug is being monitored.

This method can in particular be applied if the patient is to be treated with drugs against asthma, diabetes, hypertension, depression, cancer, epilepsy, HIV, tuberculosis, tobacco smoking, myocardial infarction, osteoporosis, rheumatology, Crohn's disease and or colitis ulcerosa.

In another embodiment the present invention relates to a medicament for treatment of a specific disease wherein the medicament is in a form which enables monitoring of the adherence of the patient, for improvement of the adherence of the patient to a second medicament to be taken by the same patient.

This medicament can in particular be a drugs against asthma, diabetes, hypertension, depression, cancer, epilepsy, HIV, tuberculosis, tobacco smoking, myocardial infarction, osteoporosis, rheumatology, Crohn's disease and or colitis ulcerosa.

The present invention can be illustrated by the following examples.

### Example 1

### Retrospective study on drug adherence

### Method

Two hundred and twenty-eight patients who participated in a trial during 2001 and 2005 were requested to participate in this study.

After signing informed consent patient's refill data of all drugs prescribed were obtained from the pharmacy during a period of 10 years. Refill data were considered eligible if at least three consecutive refills of drugs with the same ATC were registered. Data that indicated discontinuation of treatment were excluded. Adherence to treatment was calculated as the number of pills filled divided by the period between two consecutive fills multiplied by 100%. In this analysis cardiovascular drugs were excluded since these medications were investigated in the trial. Analyses were performed by SPSS 16.0. The study was approved by the local medical ethics committee.

### Results

Of the 228 patients, 182 patients (80%) agreed participation into the study. More than 19,000 prescriptions were filled during a mean of 3.064 days (standard deviation (SD) 828 days). Refill data before, during, and after the clinical trial were available for a period of 1071 days (SD 569 days, 371 days (SD 89 days), and 1755 days (SD 451 days), respectively. Participation into the clinical trial significantly increased refill adherence to non-study medication (69.9% vs. 80.4%; p=0.022). After completion of the trial, refill adherence decreased to 77.2%, which was non-significantly lower than the adherence during the clinical trial (p=0.65).

### Conclusions

From the data presented, it can be concluded that participation in a clinical trial in which adherence is measured, improves adherence to non-study medication. This effect persists after completion of the study for almost five years.

In other words: monitoring of the intake of one drug improves the adherence to other drugs from which the intake is not being monitored.

### Example 2

The combination of hypertension, high cholesterol and diabetes is seen more often and is regularly referred to as syndrome X. Although these diseases appeared to be separate, it is the current opinion that these should be treated simultaneously to get an optimal effect. This group of patients is treated with one or two antihypertensives, a cholesterol-lowering compound and one or two antidiabetics. Due to the number of compounds that has to be taken daily, the compliance of these patients is believed to be 50% or less. It is however too expensive to package all these drugs in an e-blister.

The following study is performed. Fifty patients diagnosed with the syndrome X are treated with their regular medication. One of their drugs is packaged in an e-blister to register the compliance. The compliance of all other drugs due to the monitoring of the compliance of the one drug is measured with the refill data from the pharmacy database.

### Example 3

The most effective treatment of HIV/AIDS is a cocktail of several drugs, commonly referred to as HAART. Current HAART options are combinations (or "cocktails") consisting of at least three drugs belonging to at least two types, or "classes", of antiretroviral agents. Due to the number of compounds and their side-effects the compliance of these patients is considered to diminish over time. It is however too expensive to package all these drugs in a MEMS device.

The following study is performed. Fifty patients diagnosed with HIV/AIDS are treated with their regular medication. One of their drugs is packaged in a MEMS-device to register the compliance. Due to the monitoring of the compliance of one drug, the compliance of all other drugs is increasing as well. The compliance of all other drugs due to the monitoring of the compliance of the one drug is measured with the viral load in the blood of the patients.

### Example 4

Tuberculosis has been treated with combination therapy for over fifty years. Drugs are not used singly (except in latent TB or chemoprophylaxis), and regimens that use only single drugs result in the rapid development of resistance and treatment failure. An example of such a combination therapy is isoniazid, rifampicin, ethambutol, pyrazinamide daily for two months, followed by four months of isoniazid and rifampicin given three times a week. Due to the number of compounds and their side-effects the compliance of these patients is poor. Poor compliance does not only compromise the patient itself, but also the society in general and even more particular his healthcare workers as the viral load will increase and the drug-resistant TB may develop. It is however too expensive to measure blood concentration levels of all drugs regularly during the treatment period.

The following study is performed. Fifty patients diagnosed with TB are treated with their regular medication. Of one of these drugs the blood concentration level is monitored periodically, e.g. weekly. The compliance of all other drugs due to the monitoring of the compliance of the one drug is measured with the load of TB in the blood of the patients.

### Example 5

After a myocardial infarction several drugs are prescribed to optimise the patients prognosis. Most of the patients are discharged from the hospital with a beta-blocker, an ACE-inhibitor, a diuretic, an anticoagulans and a statin. Due to the number of compounds that has to be taken daily, the compliance of these patients is generally considered to be 50% or less. It is however too expensive to monitor the compliance of all drugs with a device.

The following study is performed. Fifty patients discharged from a hospital after a myocardial infarction are treated with their regular medication. Only one of their drugs is packaged in a specific device to register the compliance.

The compliance of all other drugs due to the monitoring of the compliance of the one drug is measured with a biochemical marker, such as the LDL cholesterol.

## Claims

1. A method for the improvement of the effectiveness of a pharmaceutical therapy comprising intake by the patient of at least two different drugs by monitoring the intake of only part of the drugs.

2. A method according to claim 1 comprising intake by a patient of two different drugs by monitoring the intake of one of the drugs.

3. A method for the improvement of the effectiveness of a combination therapy comprising the intake of at least two different drugs against the same disease by monitoring the intake of one of the different drugs.

4. A set of at least two different drugs for intake by a patient, wherein only part of the different drugs is present in a form by which the intake of the drug can be monitored.

5. A set according to claim 4, wherein only one of the different drugs is present in a form by which the intake of the drug can be monitored.

6. A method for the treatment of a patient with a first drug against a first disease, wherein the patient is also being treated with at least one second drug against the first or a second disease, and wherein the intake of the at least one second drug is being monitored.

7. Medicament for treatment of a specific disease wherein the medicament is in a form which enables monitoring of the adherence of the patient, for improvement of the adherence of the patient to a second medicament to be taken by the same patient.
